# EUROPEAN PATENT SPECIFICATION

(11) **EP 0 951 504 B1**
(45) Date of publication and mention of the grant of the patent: **20.03.2002**
(21) Application number: 97954644.7
(22) Date of filing: 30.12.1997
(51) Int. Cl.: C08K 5/092, C08L 67/00

(54) **THERMOPLASTIC COMPOSITION**
THERMOPLASTISCHE ZUSAMMENSETZUNG
COMPOSITION THERMOPLASTIQUE

(30) Priority: 31.12.1996 US 34236 P; 22.12.1997 US 995981
(43) Date of publication of application: 27.10.1999
(73) Proprietor: KIMBERLY-CLARK WORLDWIDE, INC., Neenah, Wisconsin 54956 (US)
(72) Inventor: TSAI, Fu-Jya, Appleton, WI 54915 (US); ETZEL, Brian, Thomas, Appleton, WI 54914 (US)
(74) Representative: Davies, Christopher Robert
(86) International application number: US9724078
(87) International publication number: WO9829493

(56) References cited:
- EP-A- 0 765 913
- US-A- 3 853 820
- US-A- 5 502 158

## Description

### Background of the Invention

### Field of the Invention

The present invention relates to a thermoplastic composition that comprises an unreacted mixture of an aliphatic polyester polymer and a muiticarboxylic acid. The thermoplastic composition is capable of being extruded into fibers that may be formed into nonwoven structures that may be used in a disposable absorbent product intended for the absorption of fluids such as body fluids.

### Description of the Related Art

Disposable absorbent products currently find widespread use in many applications. For example, in the infant and child care areas, diapers and training pants have generally replaced reusable cloth absorbent articles. Other typical disposable absorbent products include feminine care products such as sanitary napkins or tampons, adult incontinence products, and health care products such as surgical drapes or wound dressings. A typical disposable absorbent product generally comprises a composite structure including a topsheet, a backsheet, and an absorbent structure between the topsheet and backsheet. These products usually include some type of fastening system for fitting the product onto the wearer.

Disposable absorbent products are typically subjected to one or more liquid insults, such as of water, urine, menses, or blood, during use. As such, the outer cover backsheet materials of the disposable absorbent products are typically made of liquid-insoluble and liquid impermeable materials, such as polypropylene films, that exhibit a sufficient strength and handling capability so that the disposable absorbent product retains its integrity during use by a wearer and does not allow leakage of the liquid insulting the product.

Although current disposable baby diapers and other disposable absorbent products have been generally accepted by the public, these products still have need of improvement in specific areas. For example, many disposable absorbent products can be difficult to dispose of. For example, attempts to flush many disposable absorbent products down a toilet into a sewage system typically lead to blockage of the toilet or pipes connecting the toilet to the sewage system. In particular, the outer cover materials typically used in the disposable absorbent products generally do not disintegrate or disperse when flushed down a toilet so that the disposable absorbent product cannot be disposed of in this way. If the outer cover materials are made very thin in order to reduce the overall bulk of the disposable absorbent product so as to reduce the likelihood of blockage of a toilet or a sewage pipe, then the outer cover material typically will not exhibit sufficient strength to prevent tearing or ripping as the outer cover material is subjected to the stresses of normal use by a wearer.

Furthermore, solid waste disposal is becoming an ever increasing concern throughout the world. As landfills continue to fill up, there has been an increased demand for material source reduction in disposable products, the incorporation of more recyclable and/or degradable components in disposable products, and the design of products that can be disposed of by means other than by incorporation into solid waste disposal facilities such as landfills.

As such, there is a need for new materials that may be used in disposable absorbent products that generally retain their integrity and strength during use, but after such use, the materials may be more efficiently disposed of. For example, the disposable absorbent product may be easily and efficiently disposed of by composting. Alternatively, the disposable absorbent product may be easily and efficiently disposed of to a liquid sewage system wherein the disposable absorbent product is capable of being degraded.

Although fibers prepared from aliphatic polyesters are known, problems have been encountered with their use. In particular, aliphatic polyester polymers are known to have a relatively slow crystallization rate as compared to, for example, polyolefin polymers, thereby often resulting in poor processability of the aliphatic polyester polymers. In addition, the aliphatic polyester polymers generally do not have good thermal dimensional-stability. The aliphatic polyester polymers usually undergo severe heat-shrinkage due to the relaxation of the polymer chain during downstream heat treatment processes, such as thermal bonding and lamination, unless an extra step such as heat setting is taken. However, such a heat setting step generally limits the use of the fiber in in-situ nonwoven forming processes, such as spunbond and meltblown, where heat setting is very difficult to be accomplished. In addition, the use of processing additives may retard the biodegradation rate of the original material or the processing additives themselves may not be biodegradable.

It is therefore an object of the present invention to provide a thermoplastic composition which exhibits improved processability, reduced crystal size, improved thermal dimensional-stability properties, and improved biodegradability.

It is also an object of the present invention to provide a thermoplastic composition which may be easily and efficiently formed into a fiber.

It is also an object of the present invention to provide a thermoplastic composition which is suitable for use in preparing nonwoven structures.

It is also an object of the present invention to provide a fiber or nonwoven structure that is readily degradable in the environment.

### Summary of the Invention

The present invention concerns a thermoplastic composition that is desirably biodegradable and yet which is easily prepared and readily processable into desired final structures, such as fibers or nonwoven structures.

One aspect of the present invention concerns a thermoplastic composition that comprises a mixture of a first component and a second component.

One embodiment of such a thermoplastic composition comprises a mixture of an aliphatic polyester polymer and a multicarboxylic acid, wherein the multicarboxylic acid has a total of carbon atoms that is less than about 30, wherein the thermoplastic composition exhibits desired properties.

In another aspect, the present invention concerns a fiber prepared from the thermoplastic composition wherein the fiber exhibits desired properties.

In another aspect, the present invention concerns a nonwoven structure comprising a fiber prepared from the thermoplastic composition.

One embodiment of such a nonwoven structure is a backsheet useful in a disposable absorbent product

### Detailed Description of the Preferred Embodiments

The present invention is directed to a thermoplastic composition which includes a first component and a second component. As used herein, the term "thermoplastic" is meant to refer to a material that softens when exposed to heat and substantially returns to its original condition when cooled to room temperature.

The first component in the thermoplastic composition is an aliphatic polyester polymer. Suitable aliphatic polyester polymers include, but are not limited to, poly(lactic acid), polybutytene succinate, polybutylene sucdnate-co-adipate, polyhydroxybutyrate-co-valerate, polycaprolactone, mixtures of such polymers, or copolymers of such polymers.

In one embodiment of the present invention, it is desired that the aliphatic polyester polymer used is poly(lactic acid). Poly(lactic acid) polymer is generally prepared by the polymerization of lactic acid. However, it will be recognized by one skilled in the art that a chemically equivalent material may also be prepared by the polymerization of lactide. As such, as used herein, the term "poly(lactic acid) polymer" is intended to represent the polymer that is prepared by either the polymerization of lactic acid or lactide.

Lactic acid and lactide are known to be asymmetrical molecules, having two optical isomers referred to, respectively, as the levorotatory (hereinafter referred to as "L") enantiomer and the dextrorotatory (hereinafter referred to as "D") enantiomer. As a result, by polymerizing a particular enantiomer or by using a mixture of the two enantiomers, it is possible to prepare different polymers that are chemically similar yet which have different properties. In particular, it has been found that by modifying the stereochemistry of a poly(lactic acid) polymer, it is possible to control, for example, the melting temperature, melt rheology, and crystallinity of the polymer. By being able to control such properties, it is possible to prepare a multicomponent fiber exhibiting desired melt strength, mechanical properties, softness, and processability properties so as to be able to make attenuated, heat set, and crimped fibers.

It is generally desired that the aliphatic polyester polymer be present in the thermoplastic composition in an amount effective to result in the thermoplastic composition exhibiting desired properties. The aliphatic polyester polymer will be present in the thermoplastic composition in a weight amount that is less than 100 weight percent, beneficially between about 40 weight percent to less than 100 weight percent, more beneficially between about 50 weight percent to about 95 weight percent, suitably between about 60 weight percent to about 90 weight percent, more suitably between about 60 weight percent to about 80 weight percent, and most suitably between about 70 weight percent to about 75 weight percent, wherein all weight percents are based on the total weight amount of the aliphatic polyester polymer and the multicarboxylic acid present in the thermoplastic composition.

It is generally desired that the aliphatic polyester polymer exhibit a weight average molecular weight that is effective for the thermoplastic composition to exhibit desirable melt strength, fiber mechanical strength, and fiber spinning properties. In general, if the weight average molecular weight of an aliphatic polyester polymer is too high, this represents that the polymer chains are heavily entangled which may result in a thermoplastic composition comprising that aliphatic polyester polymer being difficult to process. Conversely, if the weight average molecular weight of an aliphatic polyester polymer is too low, this represents that the polymer chains are not entangled enough which may result in a thermoplastic composition comprising that aliphatic polyester polymer exhibiting a relatively weak melt strength, making high speed processing very difficult. Thus, aliphatic polyester polymers suitable for use in the present invention exhibit weight average molecular weights that are beneficially between about 10,000 to about 2,000,000. more beneficially between about 50,000 to about 400,000, and suitably between about 100,000 to about 300,000. The weight average molecular weight for polymers or polymer blends can be determined using a method as described in the Test Methods section herein.

It is also desired that the aliphatic polyester polymer exhibit a polydispersity index value that is effective for the thermoplastic composition to exhibit desirable melt strength, fiber mechanical strength, and fiber spinning properties. As used herein, "polydispersity index" is meant to represent the value obtained by dividing the weight average molecular weight of a polymer by the number average molecular weight of the polymer. In general, if the polydispersity index value of an aliphatic polyester polymer is too high, a thermoplastic composition comprising that aliphatic polyester polymer may be difficult to process due to inconsistent processing properties caused by polymer segments comprising low molecular weight polymers that have lower melt strength properties during spinning. Thus, it is desired that the aliphatic polyester polymer exhibits a polydispersity index value that is beneficially between about 1 to about 15, more beneficially between about 1 to about 4, and suitably between about 1 to about 3. The number average molecular weight for polymers or polymer blends can be determined using a method as described in the Test Methods section herein.

It is generally desired that the aliphatic polyester polymer be melt processable. It is therefore desired that the aliphatic polyester polymer exhibit a melt flow rate that is beneficially between about 1 gram per 10 minutes to about 200 grams per 10 minutes, suitably between about 10 grams per 10 minutes to about 100 grams per 10 minutes, and more suitably between about 20 grams per 10 minutes to about 40 grams per 10 minutes. The melt flow rate of a material may be determined, for example, according to ASTM Test Method D1238-E.

In the present invention, it is desired that the aliphatic polyester polymer be biodegradable. As a result, the thermoplastic composition comprising the aliphatic polyester polymer, either in the form of a fiber or in the form of a nonwoven structure, will be degradable when disposed of to the environment and exposed to air and/or water. As used herein, "biodegradable" is meant to represent that a material degrades from the action of naturally occurring microorganisms such as bacteria, fungi, and algae.

In the present invention, it is also desired that the aliphatic polyester polymer be compostable. As a result, the thermoplastic composition comprising the aliphatic polyester polymer, either in the form of a fiber or in the form of a nonwoven structure, will be compostable when disposed of to the environment and exposed to air and/or water. As used herein, "compostable" is meant to represent that a material is capable of undergoing biological decomposition in a compost site such that the material is not visually distinguishable and breaks down into carbon dioxide, water, inorganic compounds, and biomass, at a rate consistent with known compostable materials.

The second component in the thermoplastic composition is a multicarboxylic acid. A multicarboxylic acid is any acid that comprises two or more carboxylic acid groups. Suitable for use in the present invention are dicarboxylic acids, which comprise two carboxylic acid groups. It is generally desired that the multicarboxylic acid have a total number of carbons that is not too large because then the crystallization kinetics, the speed at which crystallization occurs, could be slower than is desired. It is therefore desired that the multicarboxylic acid have a total of carbon atoms that is beneficially less than about 30, more beneficially between about 3 to about 30, suitably between about 4 to about 20, and more suitably between about 5 to about 10. Suitable multicarboxylic acids include, but are not limited to, malonic acid, citric acid, succinic acid, glutaric acid, adipic acid, pimelic acid, suberic acid, azelaic acid, sebacic acid, and mixtures of such acids.

It is generally desired that the multicarboxylic acid be present in the thermoplastic composition in an amount effective to result in the thermoplastic composition exhibiting desired properties. The multicarboxylic acid will be present in the thermoplastic composition in a weight amount that is greater than 0 weight percent, beneficially between greater than 0 weight percent to about 60 weight percent, more beneficially between about 5 weight percent to about 50 weight percent, suitably between about 10 weight percent to about 40 weight percent, more suitably between about 20 weight percent to about 40 weight percent, and most suitably between about 25 weight percent to about 30 weight percent, wherein all weight percents are based on the total weight amount of the aliphatic polyester polymer and the multicarboxylic acid present in the thermoplastic composition.

In order for a thermoplastic composition of the present invention to be processed into a product, such as a fiber or a nonwoven structure, that exhibits the properties desired in the present invention, it has been discovered that it is generally desired that the multicarboxylic acid beneficially exists in a liquid state during thermal processing of the thermoplastic composition but that during cooling of the processed thermoplastic composition, the multicarboxylic acid turns into a solid state, or crystallizes, before the aliphatic polyester polymer turns into a solid state, or crystallizes.

In the thermoplastic composition of the present invention, the multicarboxylic acid is believed to perform two important, but distinct, functions. First, when the thermoplastic composition is in a molten state, the multicarboxylic acid is believed to function as a process lubricant or plasticizer that facilitates the processing of the thermoplastic composition while increasing the flexibility and toughness of a final product, such as a fiber or a nonwoven structure, through internal modification of the aliphatic polyester polymer. While not intending to be bound hereby, it is believed that the multicarboxylic acid replaces the secondary valence bonds holding together the aliphatic polyester polymer chains with multicarboxylic acid-to-aliphatic polyester polymer valence bonds, thus facilitating the movement of the polymer chain segments. This effect is evidenced, for example, in a poly(lactic acid) and adipic acid blend where the melting temperature of the thermoplastic composition shifts to lower temperatures with an increasing blend ratio of adipic acid to poly(lactic acid). With this effect, the torque needed to turn an extruder is generally dramatically reduced as compared with the processing of the poly(lactic acid) polymer alone. In addition, the process temperature required to spin the thermoplastic composition into a final product, such as a fiber or a nonwoven structure, is generally dramatically reduced, thereby decreasing the risk for thermal degradation of the poly(lactic acid) polymer. Second, when a final product prepared from the thermoplastic composition, such as a fiber or a nonwoven structure, is being cooled and solidified from its liquid or molten state, the multicarboxylic acid is believed to function as a nucleating agent. Aliphatic polyester polymers are known to have a very slow crystallization rate. Traditionally, there are two major ways to resolve this issue. One is to change the cooling temperature profile in order to maximize the crystallization kinetics, while the other is to add a nucleating agent to increase the sites and degree of crystallization.

The process of cooling the extruded polymer to ambient temperature is usually achieved by blowing ambient or sub-ambient temperature air over the extruded polymer. It can be referred to as quenching or super-cooling because the change in temperature is usually greater than 100°C and most often greater than 150°C over a relatively short time frame (seconds). To customize this common process further into the ideal cooling temperature profile needed to be the sole method of maximizing the crystallization kinetics of aliphatic polyesters in a real manufacturing process is very difficult because of the extreme cooling needed within a very short period of time. Standard cooling methods can be used in combination with a second method of modification, though. The traditional second method is to have a nucleating agent, such as solid particulates, mixed with a thermoplastic composition to provide sites for initiating crystallization during quenching. However, such solid nucleating agents generally agglomerate very easily in the thermoplastic composition which can result in the blocking of filters and spinneret holes during spinning. In addition, the nucleating affect of such solid nucleating agents usually peaks at add-on levels of about 1 percent of such solid nucleating agents. Both of these factors generally reduce the ability or the desire to add in high weight percentages of such solid nucleating agents into the thermoplastic composition. In the processing of the thermoplastic composition of the present invention, however, it has been found that the multicarboxylic acid generally exists in a liquid state during the extrusion process, wherein the multicarboxylic acid functions as a plasticizer, while the multicarboxylic acid is still able to solidify or crystallize before the aliphatic polyester during cooling, wherein the multicarboxylic acid functions as a nucleating agent. It is believed that upon cooling from the homogeneous melt, the multicarboxylic acid solidifies or crystallizes relatively more quickly and completely just as it falls below its melting point since it is a relatively small molecule. For example, adipic acid has a melting temperature of about 162°C and a crystallization temperature of about 145°C.

The aliphatic polyester polymer, being a macromolecule, has a relatively very slow crystallization rate which means that when cooled it generally solidifies or crystallizes more slowly and at a temperature lower than its melting temperature. For example, poly(lactic acid) has a melting temperature of about 175°C and a crystallization temperature of about 121°C. During such cooling, then, the multicarboxylic acid starts to crystallize before the aliphatic polyester polymer and generally acts as solid nucleating sites within the cooling thermoplastic composition.

It is generally desired that a thermally processed thermoplastic composition or a product made from such a thermoplastic composition, such as a fiber or a nonwoven structure, exhibits a crystal size that is effective for the thermoplastic composition or a product made from the thermoplastic composition to exhibit desired properties. In one embodiment of the present invention, it is generally desired that a thermally processed thermoplastic composition or a product made from such a thermoplastic composition, such as a fiber or a nonwoven structure, exhibits a Mean Crystal Size that is beneficially less than about 120 Angstroms, more beneficially less than about 110 Angstroms, suitably less than about 100 Angstroms, more suitably less than about 80 Angstroms, and more suitably less than about 70 Angstroms. The Mean Crystal Size of a material may be determined according to the procedure described in the Test Methods section herein.

While the principal components of the thermoplastic composition of the present invention have been described in the foregoing, such thermoplastic composition is not limited thereto and can include other components not adversely effecting the the desired properties of the thermoplastic composition. Exemplary materials which could be used as additional components would include, without limitation, pigments, antioxidants, stabilizers, surfactants, waxes, flow promoters, solid solvents, plasticizers, nucleating agents, particulates, and materials added to enhance processability of the thermoplastic composition. An example of such an optional component is a surface modified particulate available, for example, from Burgess Pigment Company of Sandersville, Georgia under the designation Burgess Polyclay surface modified particulate, or from Barretts Minerals Inc. of Dillon, Montana, under the designation Micropflex1200 surface modified particulate. If such additional components are included in a thermoplastic composition, it is generally desired that such additional components be used in an amount that is beneficially less than about 5 weight percent, more beneficially less than about 3 weight percent, and suitably less than about 1 weight percent, wherein all weight percents are based on the total weight amount of the aliphatic polyester polymer, the multicarboxylic acid, and the additional components present in the thermoplastic composition.

The thermoplastic composition of the present invention is generally simply a mixture of the aliphatic polyester polymer, the multicarboxylic acid, and, optionally, any additional components. In order to achieve the desired properties for the thermoplastic composition of the present invention, it has been discovered that it is critical that the aliphatic polyester polymer and the multicarboxylic acid remain substantially unreacted with each other such that a copolymer comprising each of the aliphatic polyester polymer and the multicarboxylic acid is not formed. As such, each of the aliphatic polyester polymer and the multicarboxylic acid remain distinct components of the thermoplastic composition.

In one embodiment of the present invention, after dry mixing together the aliphatic polyester polymer and the multicarboxylic acid to form a thermoplastic composition dry mixture, such thermoplastic composition dry mixture is beneficially agitated, stirred, or otherwise blended to effectively uniformly mix the aliphatic polyester polymer and the multicarboxylic acid such that an essentially homogeneous dry mixture is formed. The dry mixture may then be melt blended in, for example, an extruder, to effectively uniformly mix the aliphatic polyester polymer and the multicarboxylic acid such that an essentially homogeneous melted mixture is formed. The essentially homogeneous melted mixture may then be cooled and pelletized. Alternatively, the essentially homogeneous melted mixture may be sent directly to a spin pack or other equipment for forming fibers or a nonwoven structure. Alternative methods of mixing together the components of the present invention include adding the multicarboxylic acid to the aliphatic polyester in, for example, an extruder being used to mix the components together. In addition, it is also possible to initially melt mix both of the components together at the same time. Other methods of mixing together the components of the present invention are also possible and will be easily recognized by one skilled in the art. In order to determine if the aliphatic polyester polymer and the multicarboxylic acid remain essentially unreacted, it is possible, to use techniques, such as nuclear magnetic resonance and infrared analysis, to evaluate the chemical characteristics of the final thermoplastic composition.

It is generally desired that the melting or softening temperature of the thermoplastic composition be within a range that is typically encountered in most process applications. As such, it is generally desired that the melting or softening temperature of the thermoplastic composition beneficially be between about 25°C to about 350°C, more beneficially be between about 55°C to about 300°C, and suitably be between about 100°C to about 200°C.

The thermoplastic composition of the present invention has been found to generally exhibit improved processability properties as compared to a thermoplastic composition comprising the aliphatic polyester polymer but none of the multicarboxylic acid. As used herein, the improved processability of a thermoplastic composition is measured as a decline in the glass transition temperature (Tg). At the glass transition temperature, the polymers in the thermoplastic composition are believed to begin segmental motion which means that there is enough energy, usually thermal energy, to allow the bulk polymer to flow. A decline in the glass transition temperature means that it takes less thermal energy to induce this segmental motion and the resultant flow. If a thermoplastic composition is processed at a relatively lower temperature, the components of the thermoplastic composition will not be as vulnerable to thermal degradation. Also, if a thermoplastic composition has a lowered glass transition temperature, then process equipment, such as an extruder, may typically be operated at lower power settings such as using less torque to turn the screw of the extruder. In general then, a thermoplastic composition having a lowered glass transition temperature will generally require less energy to process and therefore be more economical to use.

In one embodiment of the present invention, the thermoplastic composition or a product made from such a thermoplastic composition, such as a fiber or nonwoven structure, will exhibit a glass transition temperature (Tg) that is beneficially less than about 55°C, more beneficially less than about 50°C, suitably less than about 45°C, and more suitably less than about 40°C.

As used herein, the term "fiber" or "fibrous" is meant to refer to a material wherein the length to diameter ratio of such material is greater than about 10. Conversely, a "nonfiber" or "nonfibrous" material is meant to refer to a material wherein the length to diameter ratio of such material is about 10 or less.

Methods for making fibers are well known and need not be described here in detail. The melt spinning of polymers includes the production of continuous filament, such as spunbond or meltblown, and non-continuous filament, such as staple and short-cut fibers, structures. To form a spunbond or meltblown fiber, generally, a thermoplastic composition is extruded and fed to a distribution system where the thermoplastic composition is introduced into a spinneret plate. The spun fiber is then cooled, solidified, drawn by an aerodynamic system and then formed into a conventional nonwoven. Meanwhile, to produce short-cut or staple the spun fiber is cooled, solidified, and drawn, generally by a mechanical rolls system, to an intermediate filament diameter and collected fiber, rather than being directly formed into a nonwoven structure. Subsequently, the collected fiber may be "cold drawn" at a temperature below its softening temperature, to the desired finished fiber diameter and can be followed by crimping/texturizing and cutting to a desirable fiber length. Fibers can be cut into relatively short lengths, such as staple fibers which generally have lengths in the range of about 25 to about 50 millimeters and short-cut fibers which are even shorter and generally have lengths less than about 18 millimeters. See, for example, US Patent 4,789,592 to Taniguchi et al., and US Patent 5,336,552 to Strack et al.

One problem encountered with preparing fibers from only aliphatic polyester polymers is that such fibers typically experience heat shrinkage during downstream thermal processing. The heat-shrinkage mainly occurs due to the thermally-induced chain relaxation of the polymer segments in the amorphous phase and incomplete crystalline phase. To overcome this problem, it is generally desirable to maximize the crystallization of the material before the bonding stage so that the thermal energy goes directly to melting rather than to allow for chain relaxation and reordering of the incomplete crystalline structure. One solution to this problem is to subject the material to a heat-setting treatment. As such, when the fibers subjected to heat-setting reach the bonding roll, the fibers won't substantially shrink because such fibers are already fully or highly oriented. However, in typical spunbond and meltblown processes, an in-line heat-setting process is generally very difficult to achieve. The present invention generally alleviates the need for, but does not prohibit, a heat-setting step because the use of the multicarboxylic acid in the thermoplastic composition generally allows for the usage of existing spunbond and meltblown assets without major process modification. The blending of the aliphatic polyester polymer with a multicarboxylic acid therefore generally maximizes the crystallization of the aliphatic polyester polymer which generally minimizes the expected heat shrinkage of the aliphatic polyester polymer.

In addition, when preparing a short-cut or staple fiber where in-line heat setting is possible, in one embodiment of the present invention it is optional that the fibers prepared from the thermoplastic composition of the present invention undergo heat-setting. It is desired that such heat setting further reduce possible heat shrinkage of the fiber. This heat-setting can be done when the fibers are subjected to a constant strain, which typically can be, but is not limited to, about 10 to about 20 percent, at a temperature that is beneficially greater than about 50°C. more beneficially greater than about 70°C, and suitably greater than about 90°C. It is generally recommended to use the highest possible heat-setting conditions, including both applied strain and temperatures, while not sacrificing a fiber's processability. However, too high of a heat-setting temperature such as, for example, a temperature close to the melting temperature of a component of a fiber, may reduce the fiber strength and could result in the fiber being hard to handle due to tackiness.

In one embodiment of the present invention, it is desired that a fiber prepared from the thermoplastic composition of the present invention exhibit an amount of shrinking, at a temperature of about 100°C and for a time period of about 15 minutes, quantified as a Heat Shrinkage value, that is beneficially less than about 15 percent, more beneficially less than about 10 percent, suitably less than about 5 percent, and more suitably less than about 2 percent, wherein the amount of shrinking is based upon the difference between the initial and final lengths of the fiber divided by the initial length of the fiber multiplied by 100. The Heat Shrinkage value for a fiber may be determined according to the procedure described in the Test Methods section herein.

The thermoplastic composition of the present invention is suited for preparing fibers or nonwoven structures that may be used in disposable products including disposable absorbent products such as diapers, adult incontinent products, and bed pads; in catamenial devices such as sanitary napkins, and tampons; and other absorbent products such as wipes, bibs, wound dressings, and surgical capes or drapes. Accordingly, in another aspect, the present invention relates to a disposable absorbent product comprising the muiticomponent fibers of the present invention.

In one embodiment of the present invention, the thermoplastic composition is formed into a fibrous matrix for incorporation into a disposable absorbent product. A fibrous matrix may take the form of, for example, a fibrous nonwoven web. Fibrous nonwoven webs may be made completely from fibers prepared from the thermoplastic composition of the present invention or they may be blended with other fibers. The length of the fibers used may depend on the particular end use contemplated. Where the fibers are to be degraded in water as, for example, in a toilet, it is advantageous if the lengths are maintained at or below about 15 millimeters.

In one embodiment of the present invention, a disposable absorbent product is provided, which disposable absorbent product comprises a liquid-permeable topsheet, a backsheet attached to the liquid-permeable topsheet, and an absorbent structure positioned between the liquid-permeable topsheet and the backsheet, wherein the backsheet comprises fibers prepared from the thermoplastic composition of the present invention.

Exemplary disposable absorbent products are generally described in US-A-4,710,187; US-A-4,762,521; US-A-4,770,656; and US-A-4,798,603.

Absorbent products and structures according to all aspects of the present invention are generally subjected, during use, to multiple insults of a body liquid. Accordingly, the absorbent products and structures are desirably capable of absorbing multiple insults of body liquids in quantities to which the absorbent products and structures will be exposed during use. The insults are generally separated from one anoth er by a period of time.

### Test Methods

### Melting Temperature

The melting temperature of a material was determined using differential scanning calorimetry. A differential scanning calorimeter, available from T.A. Instruments Inc. of New Castle, Delaware, under the designation Thermal Analyst 2910 Differential Scanning Calorimeter(OSC), which was outfitted with a liquid nitrogen cooling accessory and used in combination with Thermal Analyst 2200 analysis software program, was used for the determination of melting temperatures.

The material samples tested were either in the form of fibers or resin pellets. It is preferred to not to handle the material samples directly, but rather to use tweezers and other tools, so as not to introduce anything that would produce erroneous results. The material samples were cut, in the case of fibers, or placed, in the case of resin pellets, into an aluminum pan and weighed to an accuracy of 0.01mg on an analytical balance. If needed, a lid was crimped over the material sample onto the pan.

The differential scanning calorimeter was calibrated using an indium metal standard and a baseline correction performed, as described in the manual for the differential scanning calorimeter. A material sample was placed into the test chamber of the differential scanning calorimeter for testing and an empty pan is used as a reference. All testing was run with a 55 cubic centimeter/minute nitrogen (industrial grade) purge on the test chamber. The heating and cooling program is a 2 cycle test that begins with equilibration of the chamber to -75°C, followed by a heating cycle of 20°C/minute to 220°C, followed by a cooling cycle at 20°C/minute to -75°C, and then another heating cycle of 20°C/minute to 220°C.

The results were evaluated using the analysis software program wherein the glass transition temperature (Tg) of inflection, endothermic and exothermic peaks were identified and quantified. The glass transition temperature was identified as the area on the line where a distinct change in slope occurs and then the melting temperature is determined using an automatic Inflection calculation.

### Apparent Viscosity

A capillary rheometer, available from Göttfert of Rock Hill, South Carolina, under the designation Göttfert Rheograph 2003 capillary rheometer, which was used in combination with WinRHEO (version 2.31) analysis software was used to evaluate the apparent viscosity rheological properties of material samples. The capillary rheometer setup included a 2000 bar pressure transducer and a 30/1:0/180 round hole capillary die.

If the material sample being tested demonstrates or is known to have water sensitivity, the material sample is dried in a vacuum oven above its glass transition temperature, i.e. above 55 or 60°C for PLA [poly(lactic acid)] materials, under a vacuum of at least 15 inches (38.1 cm) of mercury with a nitrogen gas purge of at least 30 standard cubic feet (0.85 m³) per hour (SCFH) for at least 16 hours.

Once the instrument is warmed up and the pressure transducer is calibrated, the material sample is loaded incrementally into the column, packing resin into the column with a ramrod each time to ensure a consistent melt during testing. After material sample loading, a 2 minute melt time precedes each test to allow the material sample to completely melt at the test temperature. The capillary rheometer takes data points automatically and determines the apparent viscosity (in Pascal·second) at 7 apparent shear rates (1/second): 50, 100, 200, 500, 1000, 2000, and 5000. When examining the resultant curve it is important that the curve be relatively smooth, if there are significant deviations from a general curve from one point to another, possibly due to air in the column, the test run should be repeated to confirm the results.

The resultant rheology curve of apparent shear rate vs. apparent viscosity produced gives an indication of how the material sample will run at that temperature in an extrusion process. The apparent viscosity values at a shear rate of at least 1000 1/second are of specific interest because these are the typical conditions found in commercial fiber spinning extruders.

### Weight/Number Average Molecular Weights

A gas permeation chromatography (GPC) method is used to determine the molecular weight distribution of samples of poly(lactic acid) whose weight average molecular weight (M_{w}) is between 800 to 400,000.

The GPC is setup with two PLgel Mixed K linear 5 micron, 7.5 x 300 millimeter analytical columns in series. The column and detector temperatures are 30°C. The mobile phase is HPLX grade tetrahydrofuran(THF). The pump rate is 0.8 milliliters per minute with an injection volume of 25 microliters. Total run time is 30 minutes. It is important to note that new analytical columns must be installed every 4 months, a new guard column every month, and a new in-line filter every month.

Standards of polystyrene polymers, obtained from Aldrich Chemical Co., should be mixed into solvent of dichloromethane(DCM):THF (10:90), both HPLC grade, in order to obtain 1mg/mL concentrations. Multiple polystyrene standards can be combined in one standard solution provided that their peaks do not overlap when chromatographed. A range of standards of about 687 to 400,000 should be prepared. Examples of standard mixtures with Aldrich polystyrenes of varying molecular weights(in weight average molecular weight-M_{w}) include: Standard1 (401,340; 32,660; 2,727), Standard 2 (45,730; 4,075), Standard 3 (95,800; 12,860) and Standard 4 (184,200; 24,150; 687).

Next, prepare the stock check standard. Dissolve 10g of a 200,000 molecular weight PLA standard, Catalog#19245 obtained from Polysciences Inc., to 100ml of HPLC grade DCM to a glass jar with Teflon lined lid using an orbital shaker (at least 30 minutes). Pour out the mixture onto a clean, dry, glass plate and first allow the solvent to evaporate, then place in a 35°C preheated vacuum oven and dry >14hrs under a vacuum of 25mm of Hg. Next, remove the PLA from the oven and cut the film into small strips. Immediately grind the samples using a grinding mill (w/10 mesh screen) taking care not to add too much sample and causing the grinder to freeze up. Store a few grams of the ground sample in a dry glass jar in a dessicator, while the remainder of the sample can be stored in the freezer in a similar type jar.

It is important to prepare a new check standard prior to the beginning of each new sequence and because the molecular weight is greatly affected by sample concentration great care should be taken in its weighing and preparation. To prepare the check standard weigh out 0.0800g ±0.0025g of 200,000 M_{w} PLA reference standard into a clean dry scintillation vial. Then using a volumetric pipet or dedicated repipet, add 2ml of DCM to the vial and screw the cap on tightly. Allow the sample to dissolve completely. Swirl the sample on an orbital shaker, such as a Thermolyne Roto Mix (type 51300) or similar mixer, if necessary. To evaluate whether is it dissolved hold the vial up to the light at a 45° angle. Turn it slowly and watch the liquid as it flows down the glass. If the bottom of the vial does not appear smooth, the sample is not completely dissolved. It may take the sample several hours to dissolve. Once dissolved, add 18ml of THF using a volumetric pipet or dedicated repipet, cap the vial tightly and mix.

Sample preparations begins by weighing 0.0800g ±0.0025g of the sample into a clean, dry scintillation vial (great care should also be taken in its weighing and preparation). Add 2ml of DCM to the vial with a volumetric pipet or dedicated repipet and screw the cap on tightly. Allow the sample to dissolve completely using the same technique described in the check standard preparation above. Then add 18ml of THF using a volumetric pipet or dedicated repipet, cap the vial tightly and mix.

Begin the evaluation by making a test injection of a standard preparation to test the system equilibration. Once equilibration is confirmed inject the standard preparations. After those are run , inject the check standard preparation. Then the sample preparations. Inject the check standard preparation after every 7 sample injections and at the end of testing. Be sure not to take any more than two injections from any one vial, and those two injections must be made within 4.5 hours of each other.

There are 4 quality control parameters to assess the results. First, the correlation coefficient of the fourth order regression calculated for each standard should be not less than 0.950 and not more than 1.050. Second, the relative standard deviation (RSD) of all the M_{w}'s of the check standard preparations should not be more than 5.0 percent Third, the average of the M_{w}'s of the check standard preparation injections should be within 10 percent of the M_{w} on the first check standard preparation injection. Lastly. record the lactide response for the 200 microgram per milliliter(µg/mL) standard injection on a SQC data chart. Using the chart's control lines, the response must be within the defined SQC parameters.

Calculate the Molecular statistics based on the calibration curve generated from the Polystyrene standard preparations and Mark Houwink constants for PLA and Polystyrene in THF at 30°C. Those are: Polystyrene (K= 14.1*10⁵, alpha=0.700) and PLA (K=54.9*10⁵, alpha=0.639).

### Heat Shrinkage of Fibers

The required equipment for the determination of heat shrinkage include: a convection oven (Thelco model 160DM laboratory oven), 0.5g (+/- 0.06g) sinker weights, ½inch (1.27 cm) binder dips, masking tape, graph paper with at least ¼ inch (0.64 cm) squares, foam posterboard (11 by 14 inches; 28 by 35.6 cm) or equivalent substrate to attach the graph paper and samples. The convection oven should be capable of a temperature of 100°C.

Fiber samples are melt spun at their respective spinning conditions, a 30 filament bundle is preferred, and mechanically drawn to obtain fibers with a jetstretch of 224 or higher. Only fibers of the same jetstretch can be compared to one another in regards to their heat shrinkage. The jetstretch of a fiber is the ratio of the speed of the drawdown roll divided by the linear extrusion rate (distance/time) of the melted polymer exiting the spinneret. The spun fiber is usually collected onto a bobbin using a winder. The collected fiber bundle is separated into 30 filaments, if a 30 filament bundle has not already been obtained, and cut into 9 inch (22.9 cm) lengths.

The graph paper is taped onto the posterboard where one edge of the graph paper is matched with the edge of the posterboard. One end of the fiber bundle is taped, no more than the end 1 inch (2.54 cm). The taped end is dipped to the posterboard at the edge where the graph paper is matched up such that the edge of the clip rests over one of the horizontal lines on the graph paper while holding the fiber bundle in place (the taped end should be barely visible as it's secured under the clip). The other end of the bundle is pulled taught and lined up parallel to the vertical lines on the graph paper. Next, at 7 inches (17.8 cm) down from the point where the clip is binding the fiber, pinch the 0.5g sinker around the fiber bundle. Repeat the attachment process for each replicate. Usually, 3 replicates can be attached at one time. Marks can be made on the graph paper to indicate the initial positions of the sinkers. The samples are placed into the 100°C oven such that they hang vertically and do not touch the posterboard. At time intervals of 5, 10, and 15 minutes quickly mark the new location of the sinkers on the graph paper and return samples to the oven.

After the testing is complete remove the posterboard and measure the distances between the origin (where the clip held the fibers) and the marks at 5, 10 and 15 minutes with a ruler graduated to 1/16 inch (about 0.16 cm). Three replicates per sample is recommended. Calculate averages, standard deviations and percent shrinkage. The percent shrinkage is calculated as (initial length of the fiber - measured length of the fiber) divided by the initial length of the fiber and multiplied by 100. The Heat Shrinkage values reported herein use the values obtained at 15 minutes.

### Determination of Crystal Size

Measurement of the crystal sizes within a fiber sample was determined by x-ray diffraction using an x-ray machine, available from Philips Inc. of Mahwah, New Jersey, under the designation XRG-3000 x-ray machine, outfitted with a copper tube. Photographs were obtained and a plot done using a wide angle goniometer. To determine effective crystal size of a fiber sample, a reflection pattern was obtained in the equatorial direction relative to the fiber, scanning through the (hkl) layer line. The (100) plane at about 16.4° 2Q was selected so as to be consistent with all dimension calculations. Using the Scherrer equation, a mean dimension for the crystallites perpendicular to the (100) plane was then calculated.

### Biodegradability Testing

Biodegradability testing of samples was carried out by Organic Waste Systems of Gent, Belgium, using a modified ASTM 5338.92, or equivalent ISO CD 14855, testing procedure. The modification from the ASTM 5338.92 method is that the test chambers are maintained at a constant temperature of 58°C throughout the testing rather than using an incremental temperature profile.

### EXAMPLES

### Example 1

A poly(lactic acid) polymer (PLA) was obtained from Chronopol Inc., Golden, Colorado. The poly(lactic acid) polymer had an LD ratio of 100 to 0, a melting temperature of about 175°C, a weight average molecular weight of about 211,000, a number average molecular weight of about 127,000, a polydispersity index of about 1.66, and a residual lactic acid monomer value of about 5.5 weight percent.

The poly(lactic acid) polymer was mixed with various amounts of adipic acid. The blend of the poly(lactic acid) polymer with the adipic acid involved dry mixing the components followed by melt mixing them together to provide vigorous mixing of the components, which was achieved in a counter-rotating twin screw extruder. Mixing was conducted on either a BRABENDER twin screw compounder or a HAAKE™ twin screw extruder with mixing screws.

Conversion of the prepared mixtures into fibers was conducted on an in-house fiber spinning line. The spinning line consists of a ¾" (1.91 cm) diameter extruder with a 24:1 L:D (length:diameter) ratio screw and 3 heating zones which feeds into a 0.62 inch (1.57 cm) diameter Koch® static mixer unit and then into the spinning head (4th and 5th heating zones) through a spinneret of 15 to 30 holes, where each hole has a diameter of about 500 micrometers. The temperatures of each heating zone is indicated sequentially under the temperature profile section. The fibers are air quenched at 13°C to 22°C and drawn down by a mechanical draw roll to either a winder unit or a fiber drawing unit (as in the Lurgi spunbond process). The process conditions for several of the prepared fibers are shown in Table 1.

**Table 1**

| **Polymer Blend** | **Temperature Profile** | **Comments** |
|---|---|---|
| *PLA/Adipic acid (100:0) | 160/180/190/190/190 | Needed to drop extruder rate to lower extruder torque and pressure |
| PLA/Adipic acid (85:15) | 145/155/160/160/160 | Lowered temps used to maintain spinning pressures |
| PLA/Adipic acid (75:25) | 150/170/165/160/160 | Lowered temps used to maintain spinning pressures |

| | | |
|---|---|---|
| *Not an example of the present invention | | |

The prepared fibers were then evaluated for heat shrinkage, Tg, and mean crystal size. The results of these evaluations are shown in Table 2. The actual percentage of the poly(lactic acid) polymer/adipic acid ratios were determined by using nuclear magnetic resonance as the ratio between CH and CH₂ peaks.

**Table 2**

| **Feed Percentage of Adipic** | **Actual Percentage of Adipic in spun fiber** | **Tg (°C)** | **Mean Crystal Size, L**_{**(hkl)**} **(in Angstoms)** | **Percent Heat Shrinkage** |
|---|---|---|---|---|
| *0% | 0.0% | 63.4 | 120 | 16.6% |
| 5% | 5.0% | 53.9 | -- | -- |
| 10% | 9.2% | 41.6 | 100 | 8.9% |
| 15% | - | 45.0 | -- | -- |
| 25% | 27.1% | 36.9 | 60 | 0% |

| | | | | |
|---|---|---|---|---|
| *Not an example of the present invention | | | | |

### Example 2

A poly(lactic acid) polymer was obtained from Chronopol Inc., Golden. Colorado. The poly(lactic acid) polymer had an L:D ratio of 100 to 0, a melting temperature of about 175°C, a weight average molecular weight of about 181,000, a number average molecular weight of about 115.000. a polydispersity index of about 1.57, and a residual lactic acid monomer value of about 2.3 weight percent

The poly(lactlc add) polymer was mixed with various amounts of adipic acid. The blend of the poly(lactic acid) polymer with the adipic acid involved dry mixing the components followed by melt mixing them together to provide vigorous mixing of the components, which was achieved in a counter-rotating twin screw extruder. Mixing was conducted on either a BRABENDER™ twin screw compounder or a HAAKE™ twin screw extruder with mixing screws.

Conversion of the prepared mixtures into fibers was conducted on an in-house fiber spinning line. The spinning line consists of a 3/4" (1.91 cm) diameter extruder with a 24:1 L:D (length:diameter) ratio screw and 3 heating zones which feeds into a 0.62 inch (1.57 cm) diameter Koch® static mixer unit and then into the spinning head (4th and 5th heating zones) through a spinneret of 15 to 30 holes, where each hole has a diameter of about 500 micrometers. The temperatures of each heating zone is indicated sequentially under the temperature profile section. The fibers are air quenched at 13°C to 22°C and drawn down by a mechanical draw roll to either a winder unit or a fiber drawing unit (as in the Lurgi spunbond process). The process conditions for several of the prepared fibers are shown in Table 3.

**Table 3**

| **Polymer Blend** | **Temperature Profile** | **Comments** |
|---|---|---|
| *PLA/Adipic acid (100:0) | 180/207/195/195/195 | Needed to drop extruder rate to lower extruder torque and pressure |
| PLA/Adipic acid (95:5) | 160/185/175/175/175 | Lowered temps used to maintain spinning pressures |
| PLA/Adipic acid (90:10) | 160/185/175/175/175 | Lowered temps used to maintain spinning pressures |
| PLA/Adipic acid (85:15) | 150/175/170/170/170 | Lowered temps used to maintain spinning pressures |
| PLA/Adipic acid (80:20) | 150/175/170/170/170 | Lowered temps used to maintain spinning pressures |
| PLA/Adipic acid (75:25) | 150/170/168/168/168 | Lowered temps used to maintain spinning pressures |
| PLA/Adipic acid (70:30) | 1501170/165/165/165 | Lowered temps used to maintain spinning pressures |

| | | |
|---|---|---|
| *Not an example of the present invention | | |

The prepared fibers were then evaluated for heat shrinkage, Tg, and biodegradability. The results of these evaluations are shown in Table 4. The actual percentage of the poly(lactic acid) polymerladipic acid ratios were determined by using nuclear magnetic resonance as the ratio between CH and CH₂ peaks.

**Table 4**

| **Feed Percentage of Adipic** | **Actual Percentage of Adipic in spun fiber** | **Tg (°C)** | **Biodegradation after 45 days** | **Percent Heat Shrinkage** |
|---|---|---|---|---|
| *0% | 0.0% | 56.5 | 76.1% | 34% |
| 5% | 5.2% | -- | -- | 40% |
| 10% | 9.2% | 49.5 | 92.5% | 10% |
| 15% | 18.3% | 50.9 | -- | 7% |
| 20% | 12.1% | -- | -- | 14% |
| 25% | 19.7% | 49.4 | 100% | 12% |
| 30% | 21.6% | 49.4 | -- | 0% |

| | | | | |
|---|---|---|---|---|
| *Not an example of the present invention | | | | |

Those skilled in the art will recognize that the present invention is capable of many modifications and variations without departing from the scope thereof. Accordingly, the detailed description and examples set forth above are meant to be illustrative only and are not intended to limit, in any manner, the scope of the invention as set forth in the appended claims.

## Claims

1. A thermoplastic composition comprising a mixture of:
a. an aliphatic polyester polymer having a weight average molecular weight that is between about 10,000 to about 2,000,000, wherein the aliphatic polyester polymer is present in the thermoplastic composition in a weight amount that is between about 60 weight percent to about 80 weight percent; and
b. a multicarboxylic acid having a total of carbon atoms that is less than about 30, wherein the multicarboxylic acid is present in the thermoplastic composition in a weight amount that is between about 20 weight percent to about 40 weight percent, wherein all weight percents are based on the total weight amount of the aliphatic polyester polymer and the multicarboxylic acid present in the thermoplastic composition.

2. The thermoplastic composition of claim 1 wherein the aliphatic polyester polymer is selected from the group consisting of poly(lactic acid), polybutylene succinate, polybutylene succinate-co-adipate, polyhydroxybutyrate-co-valerate, polycaprolactone, mixtures of such polymers, and copolymers of such polymers.

3. The thermoplastic composition of claim 1 or claim 2 wherein the aliphatic polyester polymer is poly(lactic) acid).

4. The thermoplastic composition of any of claims 1 to 3 wherein the aliphatic polyester polymer is present in the thermoplastic composition in a weight amount that is between about 70 weight percent to about 75 weight percent.

5. The thermoplastic composition of any of claims 1 to 4 wherein the multicarboxylic acid is selected from the group consisting of malonic acid, citric acid, succinic acid, glutaric acid, adipic acid, pimelic acid, suberic acid, azelaic acid, sebacic acid, and mixtures of such acids.

6. The thermoplastic composition of any of claims 1 to 5 wherein the multicarboxylic acid is adipic acid.

7. The thermoplastic composition of any of claims 1 to 6 wherein the multicarboxylic acid is present in the thermoplastic composition in a weight amount that is between about 25 weight percent to about 30 weight percent.

8. The thermoplastic composition of any of claims 1 to 7 wherein the multicarboxylic acid has a total of carbon atoms that is between about 3 to about 30.

9. The thermoplastic composition of any of claims 1 to 8 wherein the thermoplastic composition exhibits a glass transition temperature that is less than about 55°C.

10. The thermoplastic composition of any of claims 1 to 9 wherein the thermoplastic composition exhibits a glass transition temperature that is less than about 50°C.

11. The thermoplastic composition of claim 1 wherein the aliphatic polyester polymer is selected from the group consisting of poly(lactic acid), polybutylene succinate, polybutylene succinate-co-adipate, polyhydroxybutyrate-co-valerate, polycaprolactone, mixtures of such polymers, and copolymers of such polymers; the multicarboxylic acid is selected from the group consisting of malonic acid, citric acid, succinic acid, glutaric acid, adipic acid, pimelic acid, suberic acid, azelaic acid, sebacic acid, and mixtures of such acids; and the thermoplastic compositions exhibits a glass transition temperature that is less than about 55°C.

12. The thermoplastic composition of claim 11 wherein the aliphatic polyester polymer is poly(lactic acid) and the multicarboxylic acid is adipic acid.

13. The thermoplastic composition of claim 11 or claim 12 wherein the poly(lactic acid) polymer is present in the thermoplastic composition in a weight amount that is between about 70 weight percent to about 75 weight percent and the adipic acid is present in the thermoplastic composition in a weight amount that is between about 25 weight percent to about 30 weight percent.

14. A fiber having a mean crystal size less than 120 Angstroms, said fiber prepared from a thermoplastic composition, of any of claims 1 to 13.

15. The fiber of claim 14 wherein the fiber exhibits a Heat Shrinkage value that is less than 15 percent.

16. The fiber of claim 14 or claim 15 wherein the fiber exhibits a Heat Shrinkage value that is less than about 10 percent.

## Patentansprüche

1. Thermoplastische Zusammensetzung, umfassend eine Mischung aus
a. einem aliphatischen Polyesterpolymer mit einem gewichtsdurchschnittlichen Molekulargewicht zwischen etwa 10.000 bis etwa 2.000.000, wobei das aliphatische Polyesterpolymer in der thermoplastischen Zusammensetzung in einer Gewichtsmenge zwischen etwa 60 Gewichtsprozent bis etwa 80 Gewichtsprozent vorliegt; und
b. einer Multicarboxylsäure mit insgesamt weniger als etwa 30 Kohlenstoffatomen, wobei die Multicarboxylsäure in der thermoplastischen Zusammensetzung in einer Gewichtsmenge zwischen etwa 20 Gewichtsprozent bis etwa 40 Gewichtsprozent vorliegt, wobei alle Gewichtsprozent auf der Gesamtgewichtsmenge des aliphatischen Polyesterpolymers und der Multicarboxylsäure beruhen, die in der thermoplastischen Zusammensetzung vorliegen.

2. Thermoplastische Zusammensetzung nach Anspruch 1, wobei das aliphatische Polyesterpolymer aus der Gruppe gewählt wird, die aus Polymilchsäure, Polybutylensuccinat, Polybutylensuccinat-co-adipat, Polyhydroxybutyrat-co-valerat, Polycaprolacton, Mischungen derartiger Polymere und Copolymeren derartiger Polymere besteht.

3. Thermoplastische Zusammensetzung nach Anspruch 1 oder Anspruch 2, wobei das aliphatische Polyesterpolymer Polymilchsäure ist.

4. Thermoplastische Zusammensetzung nach einem der Ansprüche 1 bis 3, wobei das aliphatische Polyesterpolymer in der thermoplastischen Zusammensetzung in einer Gewichtsmenge vorliegt, die zwischen etwa 70 Gewichtsprozent bis etwa 75 Gewichtsprozent beträgt.

5. Thermoplastische Zusammensetzung nach einem der Ansprüche 1 bis 4, wobei die Multicarboxylsäure aus der Gruppe gewählt wird, die aus Malonsäure, Zitronensäure, Bernsteinsäure, Glutarsäure, Adipinsäure, Pimelinsäure, Suberinsäure, Azelainsäure, Sebacinsäure und Mischungen derartiger Säuren besteht.

6. Thermoplastische Zusammensetzung nach einem der Ansprüche 1 bis 5, wobei die Multicarboxylsäure Adipinsäure ist.

7. Thermoplastische Zusammensetzung nach einem der Ansprüche 1 bis 6, wobei die Multicarboxylsäure in der thermoplastischen Zusammensetzung in einer Gewichtsmenge vorliegt, die zwischen etwa 25 Gewichtsprozent bis etwa 30 Gewichtsprozent beträgt.

8. Thermoplastische Zusammensetzung nach einem der Ansprüche 1 bis 7, wobei die Multicarboxylsäure insgesamt zwischen etwa 3 bis etwa 30 Kohlenstoffatome aufweist.

9. Thermoplastische Zusammensetzung nach einem der Ansprüche 1 bis 8, wobei die thermoplastische Zusammensetzung eine Glasübergangstemperatur zeigt, die geringer als etwa 55 °C ist.

10. Thermoplastische Zusammensetzung nach einem der Ansprüche 1 bis 9, wobei die thermoplastische Zusammensetzung eine Glasübergangstemperatur zeigt, die geringer als etwa 50 °C ist.

11. Thermoplastische Zusammensetzung nach Anspruch 1, wobei das aliphatische Polyesterpolymer aus der Gruppe gewählt wird, die aus Polymilchsäure, Polybutylensuccinat, Polybutylensuccinat-co-adipat, Polyhydroxybutyrat-co-valerat, Polycaprolacton, Mischungen derartiger Polymere und Copolymeren derartiger Polymere besteht; die Multicarboxylsäure aus der Gruppe gewählt wird, die aus Malonsäure, Zitronensäure, Bernsteinsäure, Glutarsäure, Adipinsäure, Pimelinsäure, Suberinsäure, Azelainsäure, Sebacinsäure und Mischungen derartiger Säuren besteht; und die thermoplastische Zusammensetzung eine Glasübergangstemperatur von weniger als etwa 55 °C zeigt.

12. Thermoplastische Zusammensetzung nach Anspruch 11, wobei das aliphatische Polyesterpolymer Polymilchsäure ist und die Multicarboxylsäure Adipinsäure ist.

13. Thermoplastische Zusammensetzung nach Anspruch 11 oder Anspruch 12, wobei das Polymilchsäurepolymer in der thermoplastischen Zusammensetzung in einer Gewichtsmenge vorliegt, die zwischen etwa 70 Gewichtsprozent bis etwa 75 Gewichtsprozent beträgt, und die Adipinsäure in der thermoplastischen Zusammensetzung in einer Gewichtsmenge vorliegt, die zwischen etwa 25 bis etwa 30 Gewichtsprozent beträgt.

14. Faser mit einer mittleren Kristallgröße von weniger als 120 Angström, wobei die Faser aus einer thermoplastischen Zusammensetzung nach einem der Ansprüche 1 bis 13 hergestellt wird.

15. Faser nach Anspruch 14, wobei die Faser einen Wärmeschrumpfwert zeigt, der geringer als 15 Prozent ist.

16. Faser nach Anspruch 14 oder Anspruch 15, wobei die Faser einen Wärmeschrumpfwert zeigt, der geringer als etwa 10 Prozent ist.

## Revendications

1. Composition thermoplastique comprenant un mélange de :
a) un polymère polyester aliphatique ayant un poids moléculaire moyen en poids compris entre environ 10.000 et environ 2.000.000, le polymère polyester aliphatique étant présent dans la composition thermoplastique en une quantité pondérale comprise entre environ 60% en poids et environ 80% en poids ; et
b)un acide multicarboxylique ayant un nombre total d'atomes de carbone inférieur à environ 30, l'acide multicarboxylique étant présent dans la composition thermoplastique en une quantité pondérale comprise entre environ 20% en poids et environ 40% en poids, tous les pourcentages pondéraux étant exprimés par rapport au poids total du polymère polyester aliphatique et de l'acide multicarboxylique présent dans la composition thermoplastique.

2. Composition thermoplastique selon la revendication 1, dans laquelle le polymère polyester aliphatique est choisi dans le groupe consistant en le poly(acide lactique), le polybutylène succinate, le polybutylène succinate-co-adipate, le polyhydroxybutyrate-co-valérate, la polycaprolactone les mélanges de ces polymères; et les copolymères de ces polymères.

3. Composition thermoplastique selon la revendication 1 ou 2, dans laquelle le polymère polyester aliphatique est le poly(acide lactique).

4. Composition thermoplastique selon l'une quelconque des revendications 1 à 3, dans laquelle le polymère polyester aliphatique est présent dans la composition thermoplastique en une quantité pondérale comprise entre environ 70% en poids et environ 75% en poids.

5. Composition thermoplastique selon l'une quelconque des revendications 1 à 4, dans laquelle l'acide multicarboxylique est choisi dans le groupe consistant en l'acide malonique, l'acide citrique, l'acide succinique, l'acide glutarique, l'acide adipique, l'acide pimélique, l'acide subérique, l'acide azélaïque, l'acide sébacique, et leurs mélanges.

6. Composition thermoplastique selon l'une quelconque des revendications 1 à 5, dans laquelle l'acide multicarboxylique est l'acide adipique.

7. Composition thermoplastique selon l'une quelconque des revendications 1 à 6, dans laquelle l'acide multicarboxylique est présent dans la composition thermoplastique en une quantité pondérale comprise entre environ 25% en poids et environ 30% en poids.

8. Composition thermoplastique selon l'une quelconque des revendications 1 à 7, dans laquelle l'acide multicarboxylique a un nombre total d'atomes de carbone compris entre environ 3 et environ 30.

9. Composition thermoplastique selon l'une quelconque des revendications 1 à 8, qui manifeste une température de transition vitreuse inférieure à environ 55°C.

10. Composition thermoplastique selon l'une quelconque des revendications 1 à 9, qui manifeste une température de transition vitreuse inférieure à environ 50°C.

11. Composition thermoplastique selon la revendication 1, dans laquelle le polymère polyester aliphatique est choisi dans le groupe consistant en le poly(acide lactique), le polybutylène succinate, le polybutylène succinate-co-adipate, le polyhydroxybutyrate-co-valérate, la polycaprolactone, les mélanges de ces polymères et les copolymères de ces polymères ; l'acide multicarboxylique est choisi dans le groupe consistant en l'acide malonique, l'acide citrique, l'acide succinique, l'acide glutarique, l'acide adipique, l'acide pimélique, l'acide subérique, l'acide azélaïque, l'acide sébacique, et leurs mélanges ; et la composition thermoplastique manifeste une température de transition vitreuse inférieure à environ 55°C.

12. Composition thermoplastique selon la revendication 11, dans laquelle le polymère polyester aliphatique est le poly(acide lactique) et l'acide multicarboxylique est l'acide adipique.

13. Composition thermoplastique selon la revendication 11 ou 12, dans laquelle le polymère poly(acide lactique) est présent dans la composition thermoplastique en une quantité pondérale comprise entre environ 70% en poids et environ 75% en poids, et l'acide adipique est présent dans la composition thermoplastique en une quantité pondérale comprise entre environ 25% en poids et environ 30% en poids.

14. Fibre ayant une taille moyenne de cristal inférieure à 120 Angströms, ladite fibre étant préparée à partir d'une composition thermoplastique selon l'une quelconque des revendications 1 à 13.

15. Fibre selon la revendication 14, qui manifeste une valeur de Retrait Thermique inférieure à 15%.

16. Fibre selon la revendication 14 ou 15, qui manifeste une valeur de Retrait Thermique inférieure à environ 10%.
